# EUROPEAN PATENT APPLICATION

(11) **EP 2 299 437 A1**
(43) Date of publication of application: **23.03.2011**
(21) Application number: 09746591.8
(22) Date of filing: 12.05.2009
(51) Int. Cl.: G09G 5/00, H04N 5/66, H04N 5/91, H04N 5/93

(54) **IMAGE DISPLAY DEVICE, IMAGE DISPLAY METHOD, IMAGE DISPLAY PROGRAM, REPRODUCTION DEVICE, REPRODUCTION METHOD, REPRODUCTION PROGRAM, AND RECORDING MEDIUM**

(30) Priority: 12.05.2008 JP 2008124810
(71) Applicant: Sharp Kabushiki Kaisha, Osaka-shi, Osaka 545-8522 (JP)
(72) Inventor: SUDOH, Tatsuo, Osaka-shi Osaka 545-8522 (JP)
(74) Representative: Müller - Hoffmann & Partner
(86) International application number: PCT/JP2009/058843
(87) International publication number: WO 2009/139385

(57) **Abstract**

An error message displayed instead of an image which has been determined as being unable to be displayed is displayed for a time ΔT' which is set independently of a time ΔT during which each image which has been determined as being able to be displayed is displayed. According to the arrangement, during a slide show display, it is possible to inform the user of the fact that an image intended to be displayed has not been displayed, without raising a possibility that due to an error message displayed for a period of time which is as long as a period of time during which each image which can be displayed is displayed, the enjoyment of photograph viewing is spoiled or the user is worried.

## Description

### Technical Field

The present invention relates to an image display device, an image display method, and an image display program each of which is for sequentially displaying a plurality of images. The present invention further relates to a reproducing device, a reproducing method, and a reproducing program each of which is for sequentially reproducing a plurality of multimedia data sets. The present invention also relates to a recording medium storing one of the above programs.

### Background Art

As digital cameras have become in widespread use, many people have started managing photographs in a form of image data. As a result, in addition to a conventional photograph-viewing way of viewing developed photographs, there is a new, general trend of viewing photographs, recorded in the form of image data, as they are displayed in an image display device such as a television.

It is possible to display a plurality of photographs in an image display device by various display methods. Among such display methods, one typical, widely employed display method is a slide show display. The slide show display is a display method in which a plurality of photographs are switched one after another at predetermined intervals so as to be displayed. As such, a user can view the photographs, displayed one after another over time, as if to view a moving image.

There is, however, a problem that a slide show display fails in a case where photographs for the slide show display include an image which cannot be displayed (or an image which is difficult to display) for a certain reason. An image display device disclosed in Patent Literature 1, for example, is known as a technique for solving the problem.

The image display device of Patent Literature 1 displays a thumbnail image instead of an image (actual image) for a slide show display in a case where the image (actual image) requires a period of time for decompression which period is longer than a period of time of an interval after which each display image is switched to another during the slide show. As such, it is possible to switch display images at good timing.

### Citation list

Patent Literature 1
   Japanese Patent Application Publication, Tokukai, No. 2007-58193 A (Publication Date: March 8, 2007)

### Summary of Invention

The image display device disclosed in Patent Literature 1, however, poses a problem below.

Image data having a JPEG format includes a thumbnail image in a form of EXIF data. Such EXIF data included in the image data having the JPEG format may be lost due to, for example, an editing process carried out on a personal computer. In a case where such image data is targeted for a slide show display, the image display device disclosed in Patent Literature 1 fails to operate as desired.

Further, in a case where the technique disclosed in Patent Literature 1 is employed in a large-screen television or the like, the thumbnail image, when enlarged to be displayed, reveals roughness and is thus unsuitable for actual use. In addition, in a case where the thumbnail image is displayed to its original scale, the thumbnail image becomes as small as a pea and is also unsuitable for actual use.

This problem can be avoided, not by displaying a thumbnail image instead of the image which cannot be displayed, but by (i) displaying an image to be displayed subsequently to the image which cannot be displayed (i.e., skipping the image which cannot be displayed) or (ii) displaying an error message.

In the method of skipping the image which cannot be displayed, however, the image intended to be displayed is not displayed, and further the user is even uninformed of the fact that the image intended to be displayed has not actually been displayed. Thus, there arises a problem that in a case where, for example, an image is selected by the user for a slide show display, the user may be faced with and confused about a situation in which the selected image is not displayed.

This problem can be avoided by causing an error message to be displayed instead of the image which cannot be displayed. However, in a case where an error message is merely displayed instead of the image which cannot be displayed, the error message is displayed for a period of time which is as long as a period of time during which each image in a slide show display is displayed. This poses another problem that enjoyment of photograph viewing is spoiled and the user is worried.

The present invention has been accomplished in view of the above problems. It is an object of the present invention to provide an image display device in which (i) it is possible to inform a user, by displaying an error message instead of an image which cannot be displayed, of the fact that the image intended to be displayed has not been displayed and (ii) there occurs no situation in which due to an error message displayed for a period of time which is as long as a period of time during which each image in a slide show display is displayed, the enjoyment of photograph viewing is spoiled or the user is worried.

In order to solve the above problem, an image display device of the present invention is an image display device for sequentially displaying a plurality of images, including: determining means for determining whether or not each of the plurality of images is displayable; and display means for displaying an error message instead of an image which is determined by the determining means not to be displayable, a period of time during which the display means displays the error message being set independently of a period of time during which the display means displays each of images which is determined by the determining means to be displayable.

According to the above arrangement, the display means displays an error message instead of an image which cannot be displayed. As such, it is possible to inform the user of the fact that the image intended to be displayed has not been displayed.

Further, according to the above arrangement, the error message is displayed for a period of time which is set independently of a period of time during which each image which can be displayed is displayed. As such, the enjoyment of photograph viewing is not spoiled or the user is not worried due to an error message displayed for a period of time which is as long as a period of time during which each image which can be displayed is displayed.

The image display device of the present invention may preferably be arranged such that the plurality of images are sequentially and repeatedly displayed; and a period of time during which the display means displays the error message for an N-th time (where N≥2), instead of the image which is determined by the determining means not to be displayable, is set to be shorter than a period of time during which the display means displays the error message for a first time, instead of the image which is determined by the determining means not to be displayable.

According to the above arrangement, a period of time during which an error message is displayed for the first time can be set to a period of time which is sufficient for the user to understand what is indicated by the error message, and also a period of time during which the error message is displayed for the second time or later is set so as to be shorter than the period of time during which the error message is displayed for the first time. The user does not need to understand the error message when the error message is displayed for the second time or later. Hence, the above arrangement does not prevent the user from understanding what is indicated by the error message. Further, it is possible to (i) further increase the enjoyment of photograph viewing and (ii) further reduce a worry caused to the user, by shortening the period of time during which the error message is displayed for the second time or later.

The image display device of the present invention may preferably be arranged such that the determining means determines whether or not each of the plurality of images is displayable, in accordance with a data size of image data representing a target image to be determined.

The above arrangement merely requires a data size of image data representing a determination target image so as to determine whether it is possible to display the determination target image. As such, it is possible to easily determine whether the determination target image can be displayed.

The image display device of the present invention may preferably be arranged such that the determining means determines whether or not each of the plurality of images is displayable, in accordance with a data format of image data representing a target image to be determined.

The above arrangement merely requires a format of image data representing a determination target image so as to determine whether it is possible to display the determination target image. As such, it is possible to easily determine whether the determination target image can be displayed.

The image display device of the present invention may preferably be arranged such that the determining means determines whether or not each of the plurality of images is displayable, in accordance with metadata included in image data representing a target image to be determined.

According to the above arrangement, whether it is possible to display a determination target image is determined on the basis of metadata about the determination target image. As such, it is possible to make an accurate determination.

The image display device of the present invention may preferably be arranged such that the determining means determines that an image of the plurality of images is not displayable, if a decoder of the image display device could not expand image data representing said image of the plurality of images.

According to the above arrangement, whether it is possible to display a determination target image is determined on the basis of whether it is actually possible to expand the determination target image data. As such, it is possible to make an accurate determination.

The image display device of the present invention may preferably be arranged such that the determining means determines that an image of the plurality of images is not displayable, if the determining means could not obtain image data representing said image of the plurality of images.

According to the above arrangement, in a case where each of the plurality of images is displayed on the basis of image data obtained externally, it is possible to display an error message instead of an image if it has been impossible to obtain image data for displaying the image.

In order to solve the above problem, an image display method of the present invention is an image display method for sequentially displaying a plurality of images, including the steps of: (a) determining whether or not each of the plurality of images is displayable; and (b) displaying an error message instead of an image which is determined, in the step (a), not to be displayable, in the step (b), the error message being displayed for a period of time which is set independently of a period of time during which each of images, which is determined by the determining means to be displayable, is displayed.

As in the image display device according to the above arrangement, it is possible to inform the user of the fact that an image intended to be displayed has not been displayed, without raising a possibility that due to an error message displayed for a period of time which is as long as a period of time during which each image which can be displayed is displayed, the enjoyment of photograph viewing is spoiled or the user is worried.

In order to solve the above problem, a reproducing device of the present invention is a reproducing device for sequentially reproducing a plurality of multimedia data sets, including: determining means for determining whether or not each of the plurality of multimedia data sets is reproducible; display means for displaying an error message instead of a multimedia data set which is determined by the determining means not to be reproducible, a period of time during which the display means displays the error message being set independently of a period of time during which the display means reproduces each of multimedia data sets which is determined by the determining means not to be reproducible.

In order to solve the above problem, a reproducing method of the present invention is a reproducing method for sequentially reproducing a plurality of multimedia data sets, including the steps of: (a) determining whether or not each of the plurality of multimedia data sets is reproducible; and (b) displaying an error message instead of a multimedia data set which is determined, in the step (a), not to be reproducible, in the step (b), the error message being displayed for a period of time which is set independently of a period of time during which each of multimedia data sets, which is determined in the step (a) to be reproducible, is reproduced.

According to the above arrangement, it is possible to inform the user of the fact that a multimedia data set intended to be reproduced has not been reproduced, without raising a possibility that due to an error message displayed for a period of time which is as long as a period of time during which each multimedia data set which can be reproduced is reproduced, the enjoyment of photograph viewing is spoiled or that the user is worried.

The image display device and the reproducing device can each be constituted by a computer. In this case, the present invention encompasses (i) an image display program for causing a computer to function as the image display device by causing the computer to operate as each of the above means and (ii) a reproducing program for causing a computer to function as the reproducing device by causing the computer to operate as each of the above means. The present invention further encompasses a computer-readable recording medium storing either of the image display program and the reproducing program.

According to each of the image display device and the image display method of the present invention, an error message displayed instead of an image which has been determined as being unable to be displayed is displayed for a period of time which is set independently of a period of time during which each image which has been determined as being able to be displayed is displayed.

As such, it is possible to inform the user of the fact that an image intended to be displayed has not been displayed, without raising a possibility that due to an error message displayed for a period of time which is as long as a period of time during which each image which can be displayed is displayed, the enjoyment of photograph viewing is spoiled or that the user is worried.

According to the reproducing device and the reproducing method of the present invention, an error message displayed instead of a multimedia data set which has been determined as being unable to be reproduced is displayed for a period of time which is set independently of a period of time during which each multimedia data set which has been determined as being able to be reproduced is reproduced.

As such, it is possible to inform the user of the fact that a multimedia data set intended to be reproduced has not been reproduced, without raising a possibility that due to an error message displayed for a period of time which is as long as a period of time during which each multimedia data set which can be reproduced is reproduced, the enjoyment of photograph viewing is spoiled or that the user is worried.

Additional objects, features, and strengths of the present invention will be made clear by the description below. Further, the advantages of the present invention will be evident from the following explanation in reference to the drawings.

### Brief Description of Drawings

Fig. 1

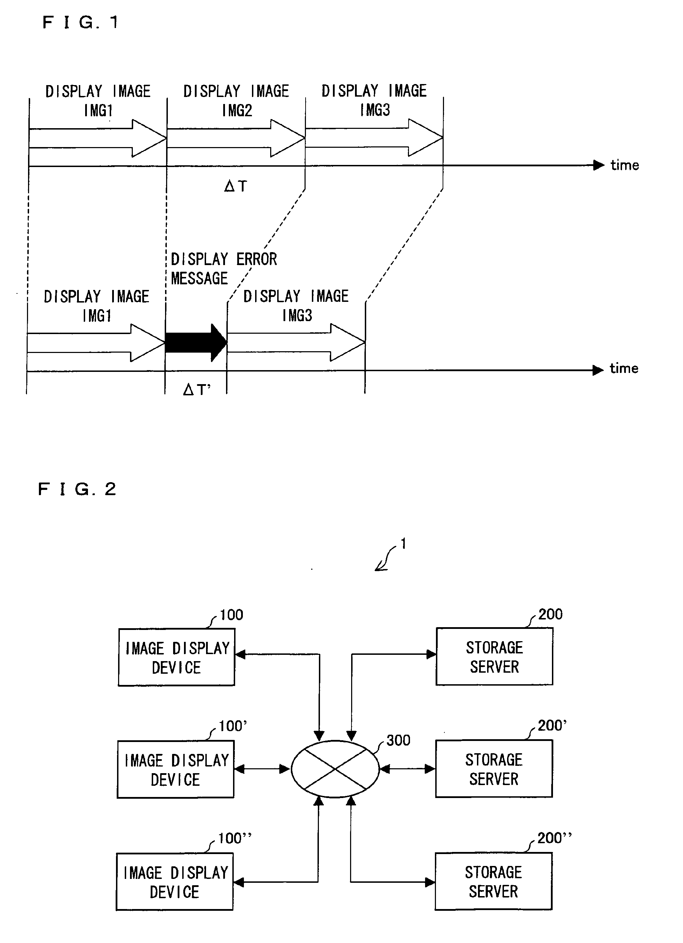

   Fig. 1 is a timing chart in accordance with an embodiment of the present invention, the timing chart illustrating timing at which images and an error message are displayed in a slide show display.
Fig. 2
   Fig. 2 is a block diagram illustrating an arrangement of an image display system in accordance with the embodiment of the present invention.
Fig. 3

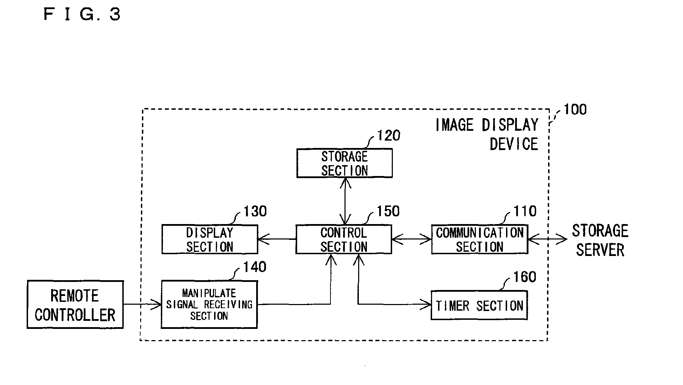

   Fig. 3 is a block diagram illustrating an arrangement of an image display device in accordance with the embodiment of the present invention.
Fig. 4

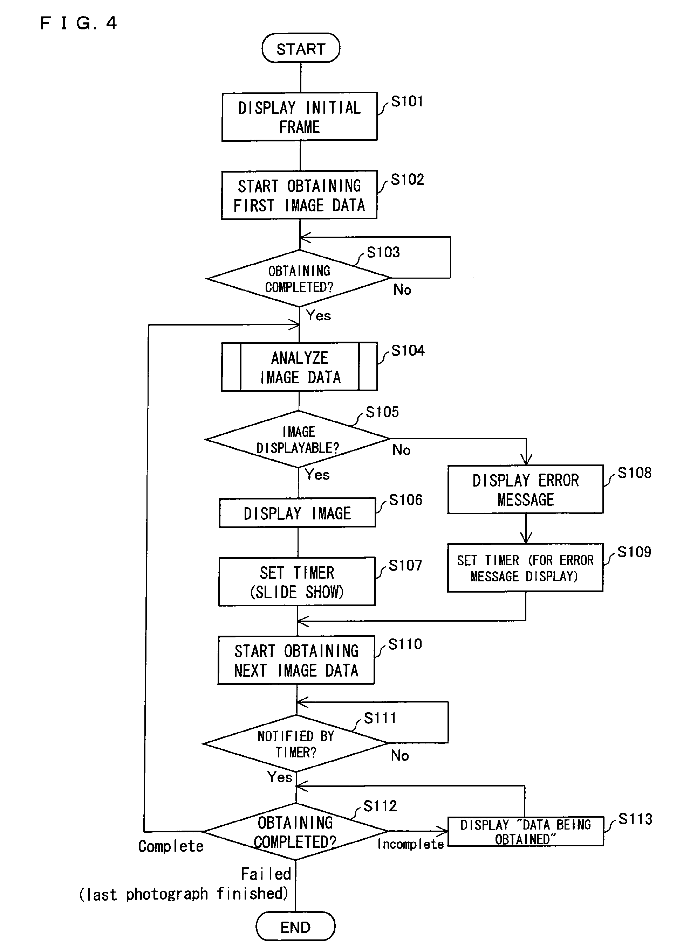

   Fig. 4 is a flowchart illustrating a slide show display process in accordance with the embodiment of the present invention.
Fig. 5

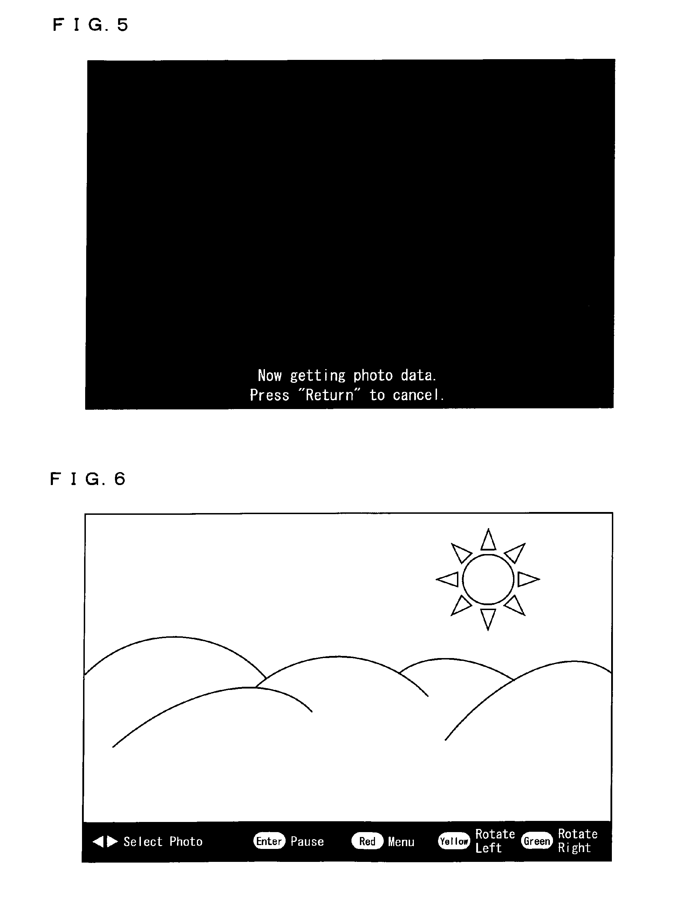

   Fig. 5 is an example illustration of an initial frame among frames displayed during the slide show display process, in accordance with the embodiment of the present invention.
Fig. 6
   Fig. 6 is an example illustration of a frame including an image among the frames displayed during the slide show display process, in accordance with the embodiment of the present invention.
Fig. 7

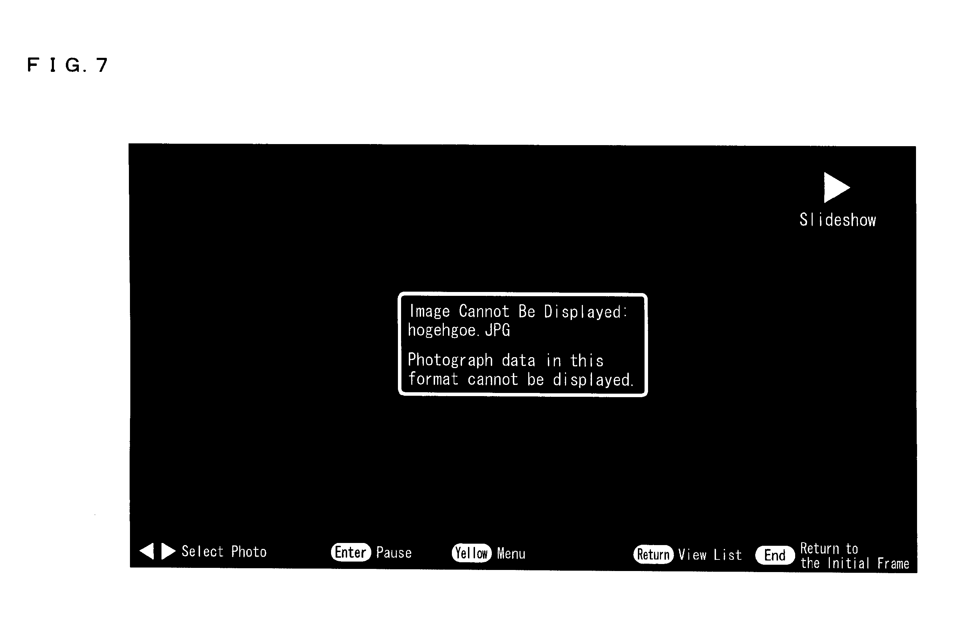

   Fig. 7 is an example illustration of a frame including an error message among the frames displayed during the slide show display process, in accordance with the embodiment of the present invention.
Fig. 8

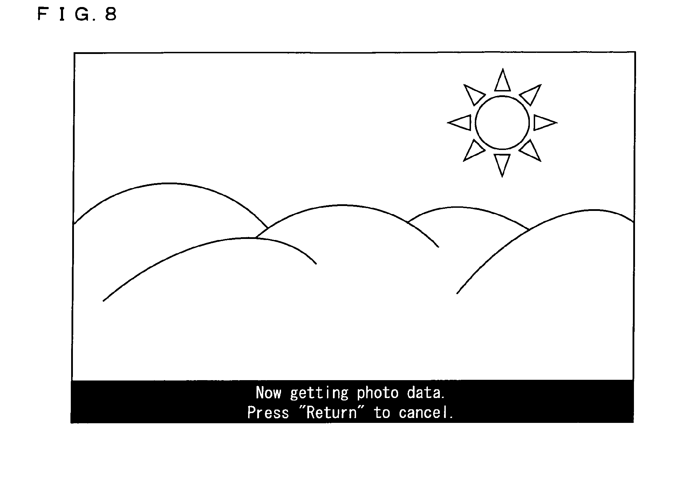

   Fig. 8 is an example illustration of, among the frames displayed during the slide show display process, a frame including a message indicating that an image to be displayed next is currently being obtained, in accordance with the embodiment of the present invention.
Fig. 9

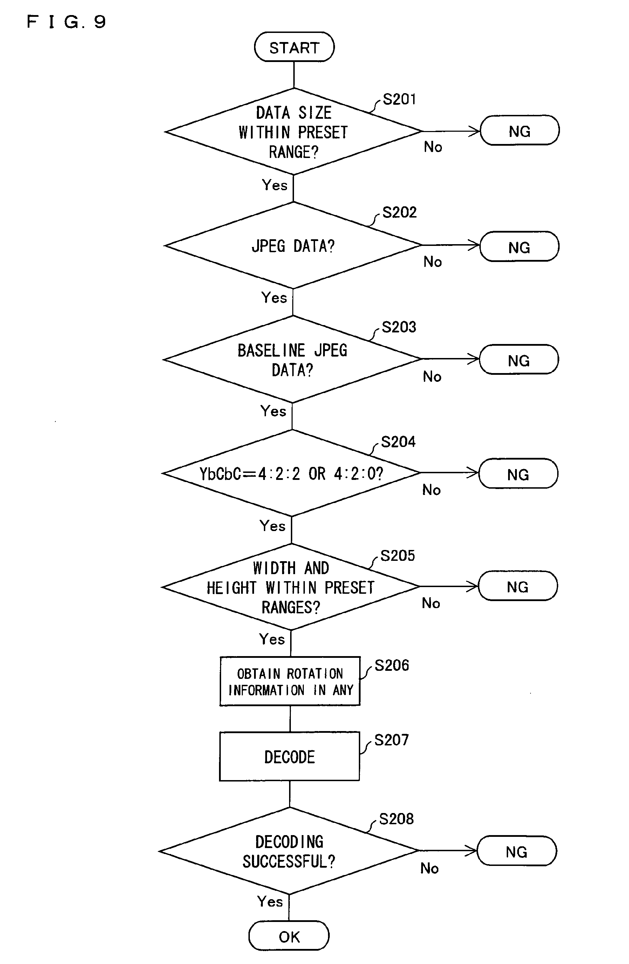

   Fig. 9 is flowchart in accordance with the embodiment of the present invention, the flowchart illustrating a determination algorithm for determining whether it is possible to display determination target image data.
Fig. 10

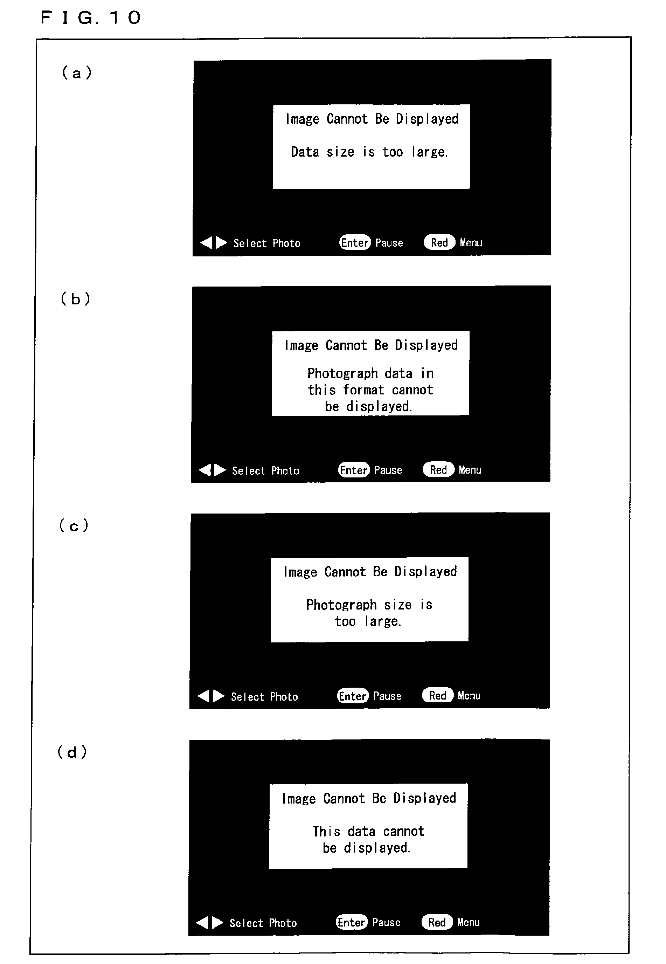

   Fig. 10 is an illustration of variations of the frame including an error message among the frames displayed during the slide show display process, in accordance with the embodiment of the present invention.
Fig. 11

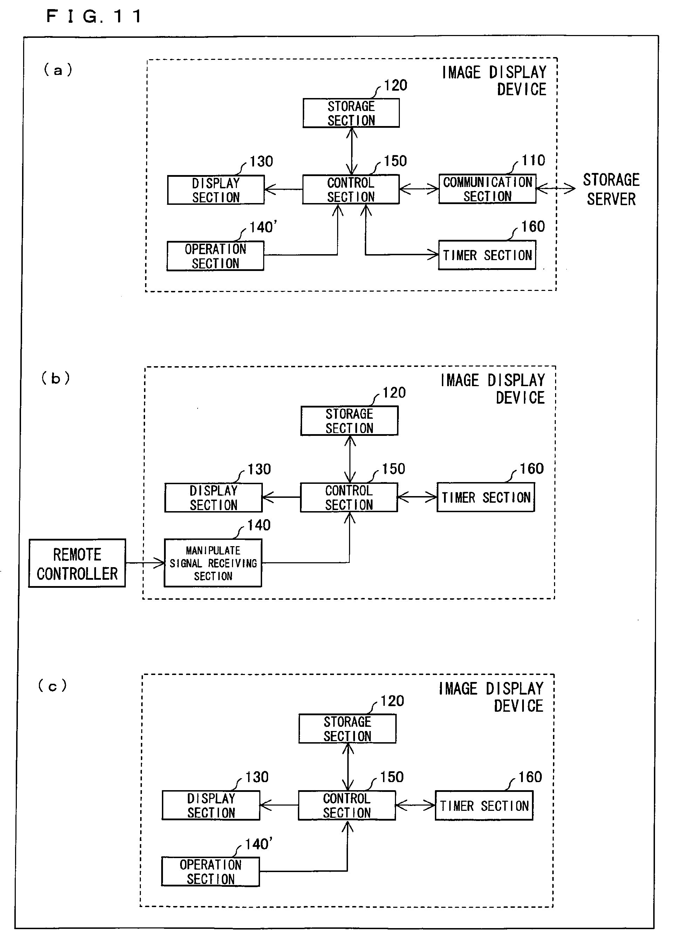

   Fig. 11 illustrates block diagrams each illustrating a variation of the image display device in accordance with the embodiment of the present invention.
Fig. 12

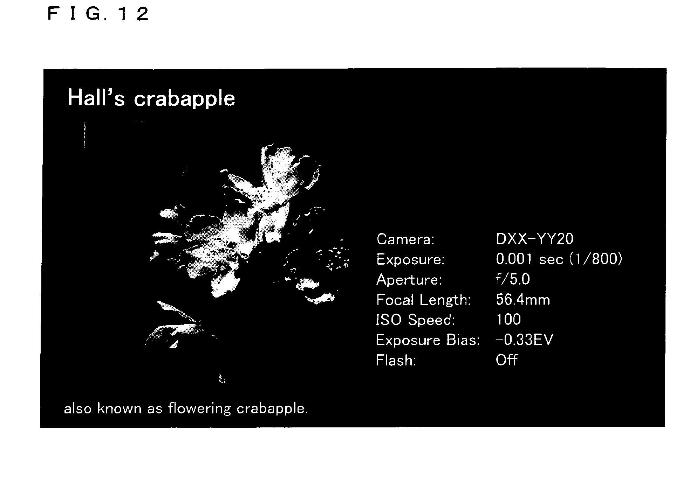

   Fig. 12 is an illustration of a frame reproduced on the basis of multimedia data in accordance with the embodiment of the present invention.
Fig. 13

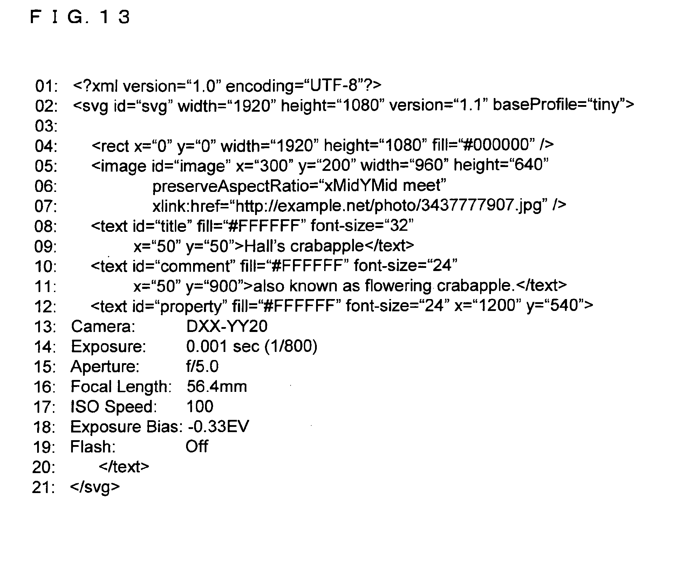

   Fig. 13 shows multimedia data written in XML in accordance with the embodiment of the present invention.
Fig. 14

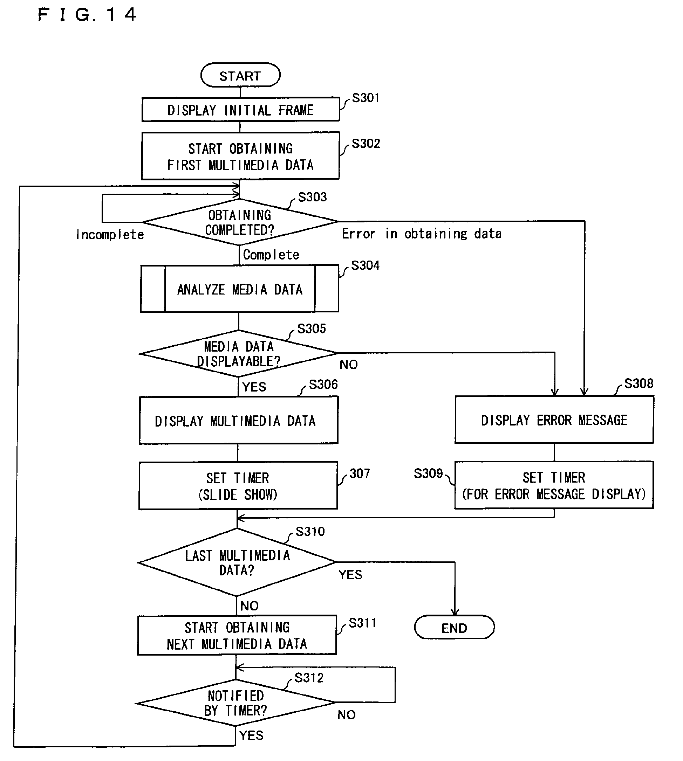

   Fig. 14 is a flowchart illustrating a variation of the slide show display process in accordance with the embodiment of the present invention.
Fig. 15

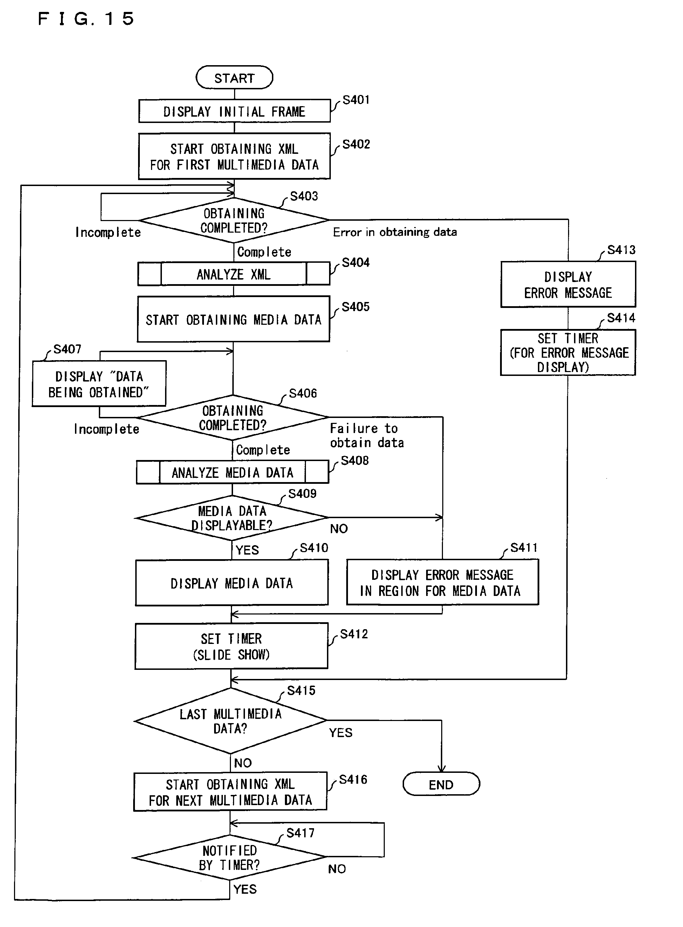

   Fig. 15 is a flowchart illustrating another variation of the slide show display process in accordance with the embodiment of the present invention.
Fig. 16

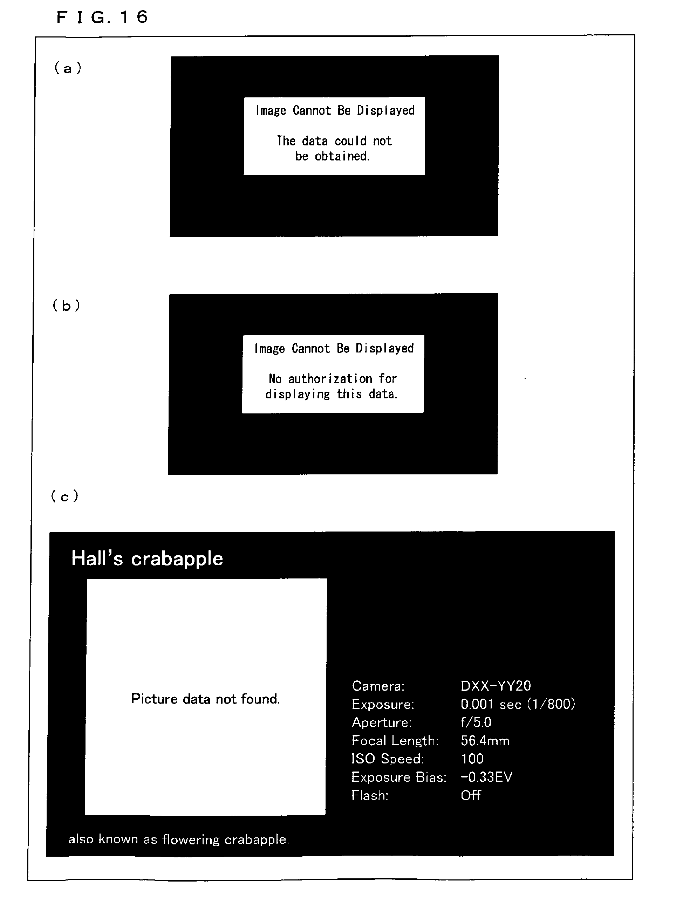

   Fig. 16 is an illustration of variations of the frame including an error message among the frames displayed during the slide show display process, in accordance with the embodiment of the present invention.

### Description of Embodiments

An image display device of an embodiment in accordance with the present invention is described below with reference to the drawings.

### (Arrangement of Image Display System)

With reference to Fig. 2, the following description first deals with an arrangement of an image display system 1 including an image display device 100 of the present embodiment. Fig. 2 is a block diagram illustrating the arrangement of the image display system 1.

The image display system 1 includes the image display device 100 and a storage server 200. The image display device 100 and the storage server 200 are connected to each other via a home network 300. Constituent devices of the image display system 1 communicate with one another in conformity with, for example, a standard established by the DLNA (Digital Living Network Alliance).

In the image display system 1, the image display device 100 functions as a client having a slide show display function, whereas the storage server 200 functions as a server storing images for a slide show display. The image display device 100 carries out a slide show display with respect to images obtained from the storage server 200.

The image display system 1 can include, in addition to the image display device 100, image display devices 100' and/or 100" each of which has an arrangement identical to the image display device 100. The image display system 1 can further include other storage servers 200' and/or 200" each of which has an arrangement identical to the storage server 200.

The phrase "slide show display" in the present specification stands for a display in which a plurality of screen images are displayed one after another while they are being switched at predetermined intervals. Note that the screen images, which are displayed one after another during a slide show display, include respective independent images, and therefore the screen images are different from a series of image frames which make up a moving image. In other words, the "slide show display" in the present specification does not encompass a reproduction of a moving image. Note also that during the slide show display, it is possible to display a screen image including text (e.g., a title of a series of images for the slide show), instead of a screen image including an image such as a photograph. Instead, it is also possible to lay out, in a screen image including an image such as a photograph, text related to the image.

### (Arrangement of Image Display Device)

The following description deals with an arrangement of the image display device 100 of the present embodiment with reference to Figs. 3 and 4.

Fig. 3 is a block diagram illustrating the arrangement of the image display device 100. As illustrated in Fig. 3, the image display device 100 includes: a communication section 110; a storage section 120; a display section 130; a manipulate signal receiving section 140; a control section 150; and a timer section 160.

The communication section 110 is a communication device which obtains images for a slide show display from the storage server 200. The storage section 120 is a storage device which stores the images obtained by the communication section 110. The display section 130 is a display device which displays the images stored in the storage section 120. The manipulate signal receiving section 140 is a communication device which receives a manipulate signal (e.g., a manipulate signal transmitted from a remote controller).

In the image display device 100, the control section 150 controls the devices with reference to the timer section 160 so that the slide show display function is carried out. The following description deals with the slide show display carried out by the image display device 100.

### (Slide Show Display Process)

A slide show display process which is carried out by the image display device 100 is described below with reference to Figs. 4 through 9. Fig. 4 is a flowchart illustrating the slide show display process which is carried out by the image display device 100. Figs. 5 through 9 each illustrate an example screen image which is displayed by the display section 130 of the image display device 100 during the slide show display process illustrated in Fig. 4.

The slide show display process illustrated in Fig. 4 is triggered, for example in response to the manipulate signal receiving section 140 receiving a predetermined manipulate signal as a trigger. When the manipulate signal receiving section 140 receives such a predetermined manipulate signal, the control section 150 controls the display section 130 to display an initial screen image on the basis of an XML document, stored in the storage section 120, for displaying the initial screen image (S101). Fig. 5 is an example illustration of the initial screen image displayed by the display section 130 in the step S101.

After completing the displaying of the initial screen image, the control section 150 instructs the communication section 110 to obtain image data indicative of an image IMG 1 to be displayed first during the slide show (S102). In response to the instruction, the communication section 110 obtains, from the storage server 200, the image data indicative of the image IMG1 and stores the image data thus obtained in the storage section 120.

If the control section 150 has confirmed that the image data obtained by the communication section 110 has been stored in the storage section 120 (Yes in S103), then the control section 150 carries out an image data analyzing step S104 so as to determine whether it is possible to display the image data stored in the storage section 120 (i.e., the image data indicative of the image IMG1) . Note that a determination algorithm for determining whether it is possible to display the image data stored in the storage section 120 will later described with reference to another drawing.

If it is determined that it is possible to display the image data stored in the storage section 120 (Yes in S105), then the control section 150 (i) controls the display section 130 to display the image IMG1 on the basis of the image data stored in the storage section 120 (S106) and (ii) sets the timer section 160 so that the timer section 160 transmits a notification after ΔT seconds have elapsed (S107). Fig. 6 is an example illustration of a screen image (including the image IMG1) which is displayed by the display section 130 in the step S106.

If it is determined that it is not possible to display the image data which is stored in the storage section 120 (No in S105), then the control section 150 (i) controls the display section 130 to display an error message on the basis of an XML document, which is stored in the storage section 120, for displaying the error message (S108) and (ii) sets the timer section 160 so that the timer section 160 transmits a notification after ΔT' seconds (S 109) have elapsed. Fig. 7 is an example illustration of a frame (including the error message) displayed in the display section 130 in the step S108. As illustrated in Fig. 7, the error message displayed in the step S108 is a character string which informs a user that it is impossible to display an image which is supposed to be displayed.

The time ΔT stands for a preset period of time during which each image in a slide show display is displayed (i.e., an interval after which currently displayed image is switched to next one). The time ΔT is set to, for example, 10 seconds. The time ΔT', on the other hand, stands for a preset period of time during which the error message is displayed. The time ΔT' is set to, for example, 5 seconds. The time ΔT and the time ΔT' are set independently of each other. The time ΔT' is set, regardless of the time ΔT, to a period of time suitable to display an error message.

After completing the timer setting in either of the steps S107 and S109, the control section 150 controls the communication section 110 to obtain an image IMG2 to be displayed subsequently to the image IMG1 (S110). This causes the communication section 110 to obtain image data indicative of the image IMG2 from the storage server 200 and stores the image data thus obtained in the storage section 120.

Upon receipt of a notification, which is transmitted from the timer section 160 and which informs that (i) the time ΔT has elapsed after the completion of the displaying of the image IMG1 or (ii) the time ΔT' has elapsed after the completion of the displaying of the error message (Yes in S111), the control section 150 determines whether it is possible to display the image data stored in the storage section 120 (i.e., the image data indicative of the image IMG2) (S105).

If the image data indicative of the image IMG2 has not yet been obtained when the timer section 160 transmits the notification (Incomplete in S112), then the control section 150 (i) controls the display section 130 to display a predetermined message indicating that the image IMG2 to be displayed next is currently being obtained (S113) and (ii) determines, after completion of the obtaining of the image data (Complete in S 112), whether it is possible to display the image data stored in the storage section 120 (S105). Fig. 8 is an example illustration of a screen image (including the image IMG1 and the predetermined message) displayed in the display section 130 in the step S112.

The image display device 100 repeats the above process until it fails to obtain image data (Failed in S112), i.e., until displaying of an image to be lastly displayed in the slide show is completed.

In the flowchart illustrated in Fig. 4, after a time has come when the next image is to be displayed (Yes in S110), the control section 150 confirms the completion of the obtaining of image data indicative of a next image (Complete in S 112) and then carries out the image data analyzing step S104. The present invention is, however, not limited to this. For example, it is also possible that the control section 150 (i) carries out the image data analyzing step S104 immediately after the completion of the obtaining of image data indicative of a next image and then (ii) displays the image or an error message when a time has come when the next image is to be displayed.

Fig. 1 is a timing chart illustrating image display timing achieved during the slide show display process illustrated in Fig. 4.

Fig. 1 illustrates, in its upper part, display timing achieved in a case where all of the images IMG1, IMG2, and IMG3 can be displayed. In the case where all of the images IMG1, IMG2, and IMG3 can be thus displayed, each of the images IMG1, IMG2, and IMG3 is displayed for ΔT seconds.

Fig. 1 further illustrates, in its lower part, display timing achieved in a case where the images IMG1 and IMG3 can be displayed and the image IMG2 cannot be displayed. In a case where the slide show thus includes the image IMG2 which cannot be displayed, an error message is displayed instead of the image IMG2 which cannot be displayed.

Note that the display time ΔT' for the error message is, as described earlier, set independently of the display time ΔT for each of the images IMG1 and IMG3, each of which can be displayed. Namely, the error message, instead of the image IMG2 which has been determined not to be displayable, is displayed for the time ΔT', which is set independently of the display time ΔT for the images IMG1 and IMG3 each of which has been determined to be displayable.

It follows that it is possible to display the error message for a period of time necessary and sufficient for the user to confirm the error message regardless of the time length of the display time ΔT set for each image in the slide show display, provided that the display time ΔT' for the error message is set to such a necessary and sufficient period of time.

As such, there arises no such situation in which the user is frustrated because (i) the display time ΔT' for the error message is too long for the next image (in this case, the image IMG3) to be displayed or (ii) the display time ΔT' for the error message is too short for the user to confirm the error message.

In the flowchart illustrated in Fig. 4, each of the images for the slide show display is displayed only once before the slide show display ends. The present embodiment is not limited to this. Alternatively, a so-called repeat reproduction can be carried out in which each of the images for the slide show display is repeatedly displayed. In this case, although an error message, that is displayed instead of an image which cannot be displayed, is also repeatedly displayed, such an error message is preferably displayed for a shorter period of time during the subsequent slide show displays.

This is because the user has already confirmed the content of the error message when the error message was displayed for the first time and therefore the user is likely to be adversely frustrated if the error message is repeatedly displayed for a period of time identical to that during which the error message was displayed for the first time.

### (Determination Algorithm)

With reference to Fig. 9, the following description deals with a determination algorithm for determining, in the image data analyzing step S105 of Fig. 4, whether it is possible to display image data which is stored in the storage section 120 (hereinafter referred to as "determination target image data").

Fig. 9 is a flowchart illustrating process steps included in the determination algorithm. In the description below, a component of the image display device 100 which component expands image data is referred to as "decoder." The decoder can be a hardware resource included in the image display device 100 or a function carried out by the control section 150 with use of software.

The control section 150 determines whether the determination target image data has a data size which falls within a preset range (S201). In other words, the control section 150 determines that image data, having a data size which falls outside the preset range, is not displayable.

The control section 150 next determines whether the determination target image data has a decodable format (S202). In other words, the control section 150 determines that image data, having no decodable format, is not displayable.

Since it is assumed herein that the image display device 100 includes a decoder which can decode only image data having a JPEG format, the control section 150 determines whether the determination target image data has a JPEG format. The present embodiment is, however, not limited to this. In a case where, for example, the image display device 100 includes a decoder which can decode only image data having a PNG format, it is necessary that the control section 150 simply be arranged to determine whether the determination target image data has a PNG format. Note that whether or not determination target image data has a JPEG format can be easily determined by, for example, determining whether or not first two bytes of the determination target image data are "0xFFD8".

The control section 150 determines, on the basis of metadata (e.g., header information or EXIF information), included in the determination target image data, whether or not the determination target image data can be expanded by the decoder (S203 through S205). Specifically, the control section 150 determines (i) whether or not the determination target image data has a baseline format (S203), (ii) whether or not YbCbCr has a ratio of either 4:2:2 or 4:2:0 (S204), and whether or not each of a height and a depth of the determination target image falls within a predetermined range (S205).

The control section 150 finally reads out rotation information, if any, in the determination target image data (S206), and then attempts to expand the determination target image data on the basis of the rotation information (S207). The control section 150 determines that image data is not displayable if the image data has failed to be expanded (S208). There occurs a failure to expand determination target image data in the step S207, for example, in a case where the determination target image data requires permission or a password or in a case where the determination target image data has been encrypted.

Note that the error message displayed in the step S109 of Fig. 4 can be varied according to a judgment condition based on which it was determined in the determination algorithm of Fig. 9 that the determination target image data could not be displayed. Fig. 10 illustrates example error messages which are preferably displayed in the step S109.

(a) of Fig. 10 illustrates an error message which is preferably displayed in a case where the control section 150 has determined in the step S201 that the data size of the determination target image data exceeds a preset upper limit.
(b) of Fig. 10 illustrates an error message which is preferably displayed in a case where the control section 150 has determined in the step S202 that the determination target image data has no decodable format.

(c) of Fig. 10 illustrates an error message which is preferably displayed in a case where the control section 150 has determined in the step S205 that at least one of the height and the width of the determination target image exceeds a preset upper limit(s). (d) of Fig. 10 illustrates an error message which is preferably displayed in a case where the control section 150 has determined in the step S206 that there has occurred a failure to expand the determination target image data.

Since by causing the error message to differ, as illustrated in Fig. 10, depending on the judgment condition serving as the reason for determining that the determination target image data could not be displayed, it is possible to inform the user of the reason why it is impossible to display the image data. It follows that it is possible to reduce the frustration which is experienced by the user in a case where the user cannot understand the reason why it is impossible to display the image data.

### (Modification 1)

The description has dealt in detail with the present invention on the basis of the embodiment. The present invention is, however, not limited to the embodiment, and can be altered in various manners within the scope of the claims. The following description deals with modifications of the present invention with reference to Fig. 11.

(a) Fig. 11 is a block diagram illustrating an arrangement of an image display device in which the manipulate signal receiving section 140 of the image display device 100 illustrated in Fig. 3 is replaced with an operation section 140'. The operation section 140' is not limited to a specific one, provided that it is operation means which is provided to a main body of the image display device. The operation section 140' can be, for example, a button. In other words, the image display device of the present invention is not necessarily operated by a remote controller, but can be operated by the operation means provided to the main body.

(b) of Fig. 11 is a block diagram illustrating an arrangement of an image display device which is obtained by modifying the image display device 100 illustrated in Fig. 3 so that image data indicative of images for a slide show display is read out from the storage section 120. In other words, the image display device of the present invention does not necessarily carry out a slide show display on the basis of image data obtained from an external device such as the storage server 200. Therefore, the image display device can also carry out a slide show display on the basis of image data read out from a storage section provided in the image display device.

(c) of Fig. 11 is a block diagram illustrating an arrangement of an image display device which is obtained by modifying the image display device 100 illustrated in (a) of Fig. 11, except that the manipulate signal receiving section 140 is replaced with an operation section 140'. In other words, the image display device of the present invention can be operated by the operation means provided to the main body, regardless of whether the image display device carries out a slide show display on the basis of image data obtained from an external device or on the basis of image data read out from a storage section provided in the image display device.

### (Modification 2)

As described above, instead of a screen image including an image such as a photograph, it is possible, during a slide show display, to display a screen image including text or a screen image including an image such as a photograph on which text is laid out. The following description deals in more detail with the image display device 100, which sequentially displays screen images of a plurality of multimedia data sets which are sequentially reproduced.

With reference to Figs. 12 and 13, the description below first deals with multimedia data and screen images obtained by reproducing the multimedia data.

The "multimedia data" stands for data which includes either (i) a reference (e.g., a URI of media data) to at least one media data set or (ii) at least one media data set itself. The "multimedia data" is described in XML, for example. Examples of the media data include: still image data indicative of a still image; moving image data indicative of a moving image; graphics data indicative of graphics; animation data indicative of an animation; text data indicative of text; and audio data indicative of audio. Note that the multimedia data can include region specifying information for specifying a region in which an image, for example, is to be displayed which image is indicated by either media data to which the multimedia data refers or media data included in the multimedia data.

Fig. 13 shows an example of multimedia data which is described in XML (more specifically, in SVG). The multimedia data shown in Fig. 13 includes: a reference (http://example.net/photo/3437777907.jpg) to still image data "3437777907.jpg"; and text data itself such as "Camera: DXX-YY20" and "Exposure: 0.001 sec(1/800)." An image tag, in which the reference to the still image data, is described includes region specifying information for specifying a region in which a still image indicated by the still image data is to be displayed. A text tag in which the text data is described includes region specifying information for specifying a region in which the text data is to be displayed. Fig. 12 shows a screen image which is displayed on the basis of the multimedia data.

Note that the multimedia data is not limited to data which is described in XML, and therefore can be binary data prepared by use of, for example, a presentation application such as Power Point (registered trademark) by Microsoft Corporation.

With reference to Figs. 14 through 16, the following description deals with a slide show display carried out by sequentially reproducing a plurality of multimedia data sets.

Fig. 14 is a flowchart illustrating a slide show display process for multimedia data, which process is carried out by the image display device 100. The slide show display process illustrated in Fig. 14 is generally identical to the slide show display process illustrated in Fig. 4. The slide show display process illustrated in Fig. 14, however, differs from the slide show display process illustrated in Fig. 4 in that (i) data to be obtained, analyzed, and displayed is not image data but multimedia data and (ii) an error message is displayed (S308) not only in a case where it is determined that it is impossible to reproduce the multimedia data (No in S305), but also in a case where there has occurred a failure to obtain the multimedia data (Error in obtaining data in S303). In the case where there has occurred a failure to obtain the multimedia data (Error in obtaining data in S303), a screen image illustrated in (a) of Fig. 16, for example, can be displayed in the step S308.

Examples of multimedia data which cannot be reproduced include: encrypted multimedia data which cannot be decrypted due to a defect in a password or a digital certificate; and multimedia data for which an expiration date is set and which multimedia data cannot be reproduced due to an expiration of validity of the multimedia data. In such cases (No in S305), a screen image illustrated in (b) of Fig. 16, for example, can be displayed in the step S308.

In the case where the multimedia data includes a reference to media data, the image display device 100 separately obtains (i) a file in which the multimedia data is stored and (ii) a file in which the media data is stored. This may cause a problem that the image display device 100 has failed to obtain the media data to which a reference is made even if it has successfully obtained the multimedia data. Further, it is supposed that it is impossible to reproduce the media data to which the reference is made even if it is possible to reproduce the multimedia data.

Fig. 15 is a flowchart illustrating a modification of the slide show display process which modification takes the problem and supposition into consideration. According to the slide show display process illustrated in Fig. 15, if the image display device 100 has failed to obtain multimedia data (Error in obtaining data in S403), then an error message is displayed (S413). Instead, if the image display device 100 has failed to obtain media data to which a reference is made (Failure to obtain data in S406) or if it is impossible to reproduce the media data to which the reference is made, (No in S409), an error message, instead of an image or the like indicated by the media data, is displayed in a region in which the image or the like indicated by the media data is to be displayed (S411). In this case, a screen image illustrated in (c) of Fig. 16, for example, can be displayed in the step S411.

In the flowchart illustrated in Fig. 15, the error message is displayed in the step S411 in the region in which the image or the like, indicated by the media data to which the reference is made, is to be displayed. Instead, it is possible to display an alternative icon in the region or to display no image in the region.

Further, in the flowchart illustrated in Fig. 15, it is determined, in the step S409, whether it is possible to reproduce the media data to which the reference is made. Instead, it is possible to determine, in the step S409, whether it is possible to reproduce the multimedia data as a whole. In this alternative, if it is impossible to reproduce the multimedia data as a whole, then an error message can be displayed for a predetermined period of time during which the error message is displayed (i.e., jump to the step S413).

A way to determine whether it is possible to reproduce the multimedia data as a whole can be, for example, as follows. Specifically, (i) the multimedia data is determined to be reproducible as a whole, if it is possible to reproduce key media data out of: the media data to which the multimedia data makes a reference; and the media data which is included in the multimedia data, whereas (ii) the multimedia data is determined to be irreproducible as a whole, if it is impossible to reproduce the key media data as a whole. The key media data can be specified by, e.g., embedding, in the multimedia data, specified information for specifying the key media data.

Another way to determine whether it is possible to reproduce the multimedia data as a whole can be, for example, as follows. Specifically, (i) the multimedia data is determined to be reproducible as a whole, if an area ratio, with respect to an entire screen image, of a region in which media data which is irreproducible is to be displayed is lower than a predetermined threshold ratio, whereas (ii) the multimedia data is otherwise determined to be irreproducible as a whole.

A further way to determine whether it is possible to reproduce the multimedia data as a whole can be, for example, as follows. Specifically, (i) the multimedia data is determined to be reproducible as a whole, if a ratio of the number of irreproducible media data with respect to a sum of: the number of media data to which the multimedia data makes a reference; and the number of media which are included in such multimedia data, is lower than a predetermined threshold ratio, and (ii) the multimedia data is otherwise determined to be irreproducible as a whole.

### (Program and Recording Medium)

Finally, the blocks of the image display device 100 can be realized by way of hardware or by way of software as executed by a CPU as follows.

The image display device 100 includes a CPU (central processing unit) and memory devices (memory media). The CPU (central processing unit) executes commands, described in control programs, to realize the functions. The memory devices include a ROM (read only memory) in which the control programs are stored, a RAM (random access memory) to which the programs are loaded, and a memory in which the programs and various data are stored. The objective of the present invention can also be achieved (i) by loading, to the image display device 100, a computer-readable storage medium in which a program code (executable program, intermediate code program, or source program) of the control program is stored for the image display device 100, which program code is software causing the functions to be carried out, and then (ii) by causing the computer (or CPU, MPU) to read out and execute the program code stored in the storage medium.

The storage medium may be, for example, a tape, such as a magnetic tape or a cassette tape; a magnetic disk, such as a floppy (registered trademark) disk or a hard disk, or an optical disk, such as CD-ROM/MO/MD/DVD/CD-R; a card, such as an IC card (memory card) or an optical card; or a semiconductor memory, such as a mask ROM/EPROM/EEPROM/flash ROM.

The image display device 100 can be arranged to be connectable to a communications network so that the program code is delivered over the communications network. The communications network is not limited to a specific one, and therefore can be, for example, the Internet, an intranet, extranet, LAN, ISDN, VAN, CATV communications network, virtual dedicated network (virtual private network), telephone line network, mobile communications network, or satellite communications network. The transfer medium which makes up the communications network is not limited in any particular manner, and may be, for example, wired line, such as IEEE 1394, USB, electric power line, cable TV line, telephone line, or ADSL line; or wireless, such as infrared radiation (IrDA, remote control), Bluetooth (registered trademark), 802.11 wireless, HDR, mobile telephone network, satellite line, or terrestrial digital network. The present invention can be achieved by use of a computer data signal embodied in a carrier wave which signal is formed by electronic transmission of the program code.

The embodiments and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided that such variations do not exceed the scope of the patent claims set forth below.

### Industrial Applicability

The present invention is applicable to an image display device having a slide show display function. In particular, the present invention is suitably applicable to an image display device, such as a television, which can display only limited images due to its hardware constraint.

### Reference Signs List

100 image display device (image display device; reproducing device)
110 communication section
120 storage section
130 display section
140 manipulate signal receiving section
150 control section (determining means; display means)
160 timer section

## Claims

1. An image display device for sequentially displaying a plurality of images, comprising:
determining means for determining whether or not each of the plurality of images is displayable; and
display means for displaying an error message instead of an image which is determined by the determining means not to be displayable,
a period of time during which the display means displays the error message being set independently of a period of time during which the display means displays each of images which is determined by the determining means to be displayable.

2. The image display device according to claim 1,
wherein:
the plurality of images are sequentially and repeatedly displayed; and
a period of time during which the display means displays the error message for an N-th time (where N≥2), instead of the image which is determined by the determining means not to be displayable, is set to be shorter than a period of time during which the display means displays the error message for a first time, instead of the image which is determined by the determining means not to be displayable.

3. The image display device according to claim 1 or 2, wherein the determining means determines whether or not each of the plurality of images is displayable, in accordance with a data size of image data representing a target image to be determined.

4. The image display device according to claim 1 or 2, wherein the determining means determines whether or not each of the plurality of images is displayable, in accordance with a data format of image data representing a target image to be determined.

5. The image display device according to claim 1 or 2, wherein the determining means determines whether or not each of the plurality of images is displayable, in accordance with metadata included in image data representing a target image to be determined.

6. The image display device according to claim 1 or 2, wherein the determining means determines that an image of the plurality of images is not displayable, if a decoder of the image display device could not expand image data representing said image of the plurality of images.

7. The image display device according to claim 1 or 2, wherein the determining means determines that an image of the plurality of images is not displayable, if the determining means could not obtain image data representing said image of the plurality of images.

8. An image display method for sequentially displaying a plurality of images, comprising the steps of:
(a) determining whether or not each of the plurality of images is displayable ; and
(b) displaying an error message instead of an image which is determined, in the step (a), not to be displayable,
in the step (b), the error message being displayed for a period of time which is set independently of a period of time during which each of images, which is determined by the determining means to be displayable, is displayed.

9. An image display program for causing a computer to operate as an image display device recited in any one of claims 1 to 7,
the image display program causing the computer to function as each of the means of the image display device.

10. A computer-readable recording medium in which the image display program recited in claim 9 is stored.

11. A reproducing device for sequentially reproducing a plurality of multimedia data sets,
comprising:
determining means for determining whether or not each of the plurality of multimedia data sets is reproducible; and
display means for displaying an error message instead of a multimedia data set which is determined by the determining means not to be reproducible,
a period of time during which the display means displays the error message being set independently of a period of time during which the display means reproduces each of multimedia data sets which is determined by the determining means not to be reproducible.

12. A reproducing method for sequentially reproducing a plurality of multimedia data sets, comprising the steps of:
(a) determining whether or not each of the plurality of multimedia data sets is reproducible; and
(b) displaying an error message instead of a multimedia data set which is determined, in the step (a), not to be reproducible,
in the step (b), the error message being displayed for a period of time which is set independently of a period of time during which each of multimedia data sets, which is determined in the step (a) to be reproducible, is reproduced.

13. A reproducing program for causing a computer to operate as the reproducing device recited in claim 11,
the reproducing program causing the computer to function as each of the means of the reproducing device.

14. A computer-readable recording medium in which the reproducing program recited in claim 13 is stored.
